# EUROPEAN PATENT APPLICATION

(11) **EP 4 274 271 A2**
(43) Date of publication of application: **08.11.2023**
(21) Application number: 23196599.7
(22) Date of filing: 21.08.2019
(51) Int. Cl.: H04W 4/40

(54) **INTERNET OF VEHICLES DATA TRANSMISSION METHOD, TRANSMISSION TERMINAL AND NETWORK SIDE DEVICE**

(30) Priority: 02.11.2018 CN 201811300680
(62) Divisional of application: 19880776.0
(71) Applicant: Datang Mobile Communications Equipment Co., Ltd., Beijing 100085 (CN)
(72) Inventor: CHEN, Li, Beijing (CN); FENG, Yuan, Beijing (CN); ZHAO, Yali, Beijing (CN)
(74) Representative: Studio Torta S.p.A.

(57) **Abstract**

A data transmission method of Internet of vehicles, a sending terminal and a network device are provided. The method includes: receiving a retransmission configuration sent by a network-side device, where the retransmission configuration is configured to indicate a pre-allocated retransmission resource; and performing a HARQ retransmission corresponding to an initial transmission, on the pre-allocated retransmission resource.

## Description

### TECHNICAL FIELD

The present disclosure relates to the field of communications technologies, and in particular, to a data transmission method of Internet of vehicles, a sending terminal and a network device.

### BACKGROUND

As is well known, a direct communication between devices is a typical communication mode of a vehicle to outside information exchange (Vehicle to X, V2X) system. In the standard architecture in the related art, a direct link between devices is defined, that is, a Device to Device (D2D) link is a direct link Sidelink, or PCS link; the cellular communication link between the Network and the direct communication device is referred to as a Device to Network (D2N) link, or Uu link.

The devices in direct communication may all be on-line or off-line, or some devices may be on-line and some off-line. The devices participating in direct communication, i.e. the on-network, are located within the 3GPP direct communication carrier coverage, and the devices participating in direct communication, i.e. the off-network, are not located within the 3GPP direct communication carrier coverage. Stated another way, the on-network device may search for a 3GPP base station, which may be controlled by the 3GPP base station if necessary.

Typical communication scenarios for direct communication include the following three kinds:
1. one-to-one communication (namely unicast) between direct communication terminals;
2. one device can send the same data to all devices in one communication group at a time (namely multicast);
3. one device can send the same data (i.e., broadcast) to all nearby devices at once.

The direct communication supports two resource allocation modes including:
mode 1, a resource allocation mode (referred to as mode 1 in 5G and mode3 in LTE) scheduled by a network-side, that is, a mode in which a network-side device (base station) allocates a direct link resource to a terminal on a Uu link according to a Sidelink BSR (Buffer state reporting) reported by the terminal.

In the method 2, the terminal autonomously selects a resource allocation mode of resources (referred to as mode2 (mode 2) in the fifth generation mobile communication technology (5G) and referred to as mode4 (mode 4) in Long Term Evolution (LTE)), that is, the terminal autonomously selects resources from a transmission resource pool preconfigured for the terminal or broadcasted by the network-side device to perform transmission of the direct communication link.

In the LTE V2X network and the LTE D2D network, the transmission modes adopted by direct communication between terminals and multicast and broadcast are similar, and both are that a sending terminal selects a resource Access Control (MAC) Protocol Data Unit (PDU) from a resource pool allocated or autonomously selected by the network-side. One MAC PDU includes one or more MAC sub-PDUs, and one MAC sub-PDU includes one MAC sub-header and 0 or 1 MAC payload part, where the MAC payload part refers to a MAC Control Element (CE), a MAC Service Data Unit (SDU), or padding. The repeated transmission activation/deactivation MAC CE is a MAC control unit. Each MAC CE, MAC SDU, or padding requires a MAC sub-header indication, and a Logical Channel Identification (LCID) field in the MAC sub-header is configured to indicate a Logical Channel number corresponding to the MAC CE type or MAC SDU.

Unicast transmission between terminals is introduced into a 5G system, the unicast transmission supports a Hybrid Automatic Repeat reQuest (HARQ) mechanism, there are feedback and retransmission for transmission between two terminals, and meanwhile, feedback and retransmission are introduced for multicast transmission.

In the mechanism in the related art, when a mode that network-side device allocates direct link resources between terminals is adopted, no feedback and retransmission mechanism exists. If the receiving terminal is required to send HARQ feedback to the sending terminal on the direct link according to a feedback retransmission mechanism of a reference Uu interface, the sending terminal sends the feedback to the base station on the Uu interface, and the base station allocates retransmission resources for the two terminals on the direct link according to the HARQ feedback if the NACK feedback is negatively acknowledged. In this retransmission feedback mode, feedback resources on two links are occupied, so that the feedback resource overhead is high.

### SUMMARY

The scope of the present invention is determined only by the scope of the appended claims.

A data transmission method of an Internet of vehicles, a sending terminal and network-side device are provided in the present disclosure, to solve the issue that the overhead of feedback resources of retransmission feedback is high.

To achieve the above object, in one aspect, the present invention provides a data transmission method of Internet of vehicles according to claim 1 and further detailed in the dependent claims referring back to this claim. A corresponding sending terminal is provided in claim 5.

On the other hand, the present invention provides a data transmission method according to claim 3 and further detailed in the dependent claims referring back to this claim. A corresponding network-side device is provided in claim 7.

It should be noted that the network-side device refers to a base station or other device that directly controls a terminal on the network side.

According to the present disclosure, a retransmission configuration sent by a network-side device is received, where the retransmission configuration is configured to indicate a pre-allocated retransmission resource; and a hybrid automatic repeat request (HARQ) retransmission corresponding to an initial transmission is performed on the pre-allocated retransmission resource. Since the pre-allocated resources are pre-allocated by the network-side device, it is not required to apply to the network-side device for retransmission resources when an initial transmission fails, thereby reducing the signaling overhead and the data retransmission delay effectively, so that it is able to solve the problems of huge consumption of feedback resources and multiplying time delay caused by the adoption of an HARQ mechanism in a direct link transmission mode allocated by the network-side, and low time delay and high reliability of direct link data transmission are effectively guaranteed.

### BRIEF DESCRIPTION OF THE DRAWINGS

Fig. 1 is a schematic view of a network architecture to which some embodiments of the present disclosure are applicable;
Fig. 2 is a data transmission method of the Internet of vehicles provided in some embodiments of the present disclosure;
FIG. 3 is another data transmission method of the Internet of vehicles provided in some embodiments of the present disclosure;
Fig. 4 is a block diagram of a terminal provided in some embodiments of the present disclosure;
Fig. 5 is a block diagram of a network-side device provided in some embodiments of the present disclosure;
Fig. 6 is a block diagram of another terminal provided in some embodiments of the present disclosure; and
Fig. 7 is a block diagram of another network-side device provided in some embodiments of the disclosure.

### DETAILED DESCRIPTION

To make the technical problems, technical solutions and advantages to be solved by the present disclosure clearer, the following detailed description is made with reference to the accompanying drawings and specific embodiments. Obviously, scope of the invention is defined by the scope of the appended claims

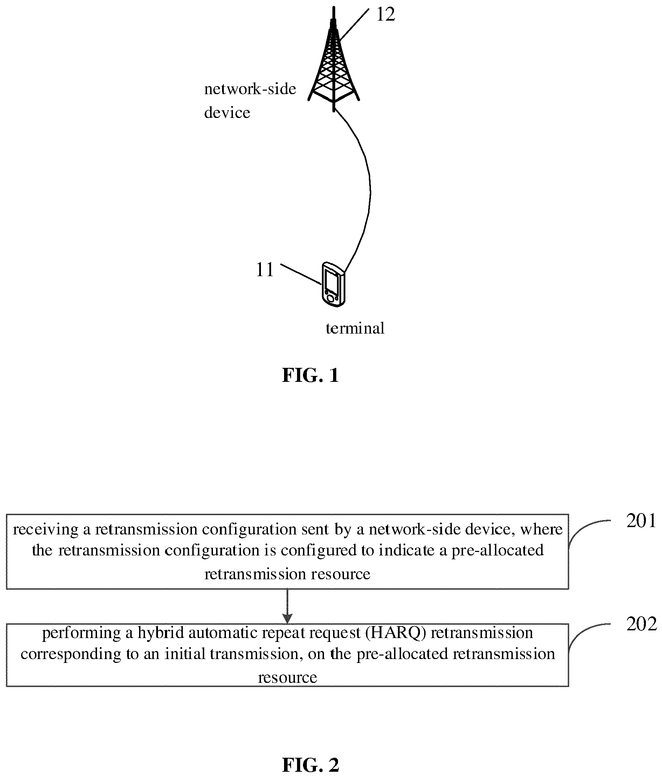

Referring to Fig. 1, Fig. 1 is a schematic view of a network structure to which some embodiments of the present disclosure are applicable, and as shown in Fig. 1, the network structure includes a terminal 11 and a network-side device 12, where the terminal 11 may be a User Equipment (UE) or other terminal devices, for example: it should be noted that, in some embodiments of the present disclosure, a specific type of terminal is not limited, and the terminal may be a terminal-side Device such as a Mobile phone, a Tablet Personal Computer (Tablet Personal Computer), a Laptop Computer (Laptop Computer), a Personal Digital Assistant (PDA), a Mobile Internet Device (MID), or a Wearable Device (Wearable Device). The network-side device 12 refers to a base station or other device for directly controlling the terminal on the network-side. Specifically, the network-side device 12 may be a base station, for example: macro station, LTE eNB, 5GNRNB, and the like; the network-side device may also be a small station, such as a Low Power Node (LPN), pico, femto, or the network-side device may be an Access Point (AP); the base station may also be a network node composed of a Central Unit (CU) and a plurality of Transmission Reception Points (TRPs) whose management is and controls. It should be noted that, in some embodiments of the present disclosure, the specific type of the network-side device is not limited.

Referring to Fig. 2 which is a flowchart of a data transmission method of a vehicle networking according to some embodiments of the present disclosure, and as shown in Fig. 2, the data transmission method of a vehicle networking is applied to a sending terminal on a direct link, and includes the following steps:
Step 201: receiving a retransmission configuration sent by a network-side device, where the retransmission configuration is configured to indicate a pre-allocated retransmission resource;
Step 202: performing a hybrid automatic repeat request (HARQ) retransmission corresponding to an initial transmission, on the pre-allocated retransmission resource.

The data transmission method of the Internet of vehicles provided by some embodiments of the disclosure is mainly applied to data transmission of unicast or multicast on a direct link.

The network-side device may indicate the pre-allocated retransmission resources of the sending terminal on the direct link through the retransmission configuration. The pre-allocated retransmission resources may be activated when the sending terminal receives the retransmission configuration, or may be activated subsequently. Meanwhile, the network-side device may also allocate initial transmission resources for unicast or multicast transmission on the direct link to the sending terminal through the resource allocation command, and the transmission resources are special for the sending terminal receiving the resource allocation command. The initial transmission resource allocation may be a configured resource scheduling (configured grant) or a dynamic resource scheduling. The sending terminal may first perform an initial transmission on the initial transmission resource, and when receiving a Negative Acknowledgement (NACK) feedback from the receiving terminal or receiving no Acknowledgement (ACK) feedback from the receiving terminal within a predetermined time, the sending terminal retransmits the data packet whose initial transmission failed through the pre-allocated retransmission resource. Therefore, it is not required to apply to the network-side device for retransmission resources when an initial transmission fails, thereby reducing the signaling overhead and the data retransmission delay effectively, so that it is able to solve the problems of huge consumption of feedback resources and multiplying time delay caused by the adoption of an HARQ mechanism in a direct link transmission mode allocated by the network-side, and low time delay and high reliability of direct link data transmission are effectively guaranteed.

It should be noted that, the specific type of the pre-allocated retransmission resource may be various, for example, in some embodiments of the present disclosure, the pre-allocated retransmission resource is a shared resource pool, a first retransmission resource, or a second retransmission resource,
the first retransmission resource is a retransmission resource pool allocated by the network-side device for the sending terminal or a terminal pair,
the second retransmission resource is a retransmission resource allocated by the network-side device for each initially transmitted data packet, and the terminal pair includes the sending terminal and a receiving terminal on the direct link.

It should be noted that, for different types of pre-allocated retransmission resources, the transmission modes of the corresponding retransmission configurations are different, and this is explained in detail below.

In an embodiment, when the pre-allocated retransmission resource is the shared resource pool, the retransmission configuration is transmitted on a broadcast message or a radio resource control RRC signaling; the retransmission configuration is configured to indicate one or more of the shared resource pools. Specifically, the shared resource pool is a direct link resource pool or an additional resource pool in a resource allocation mode in which the terminal autonomously selects resources, and the retransmission configuration may indicate identification information of the shared resource pool, so that the sending terminal may retransmit a data packet to be retransmitted to the terminal through the shared resource pool. When the network-side device has at least two shared resource pools indicated by the retransmission configuration, the sending terminal needs to first select one shared resource pool for retransmission.

In some embodiments of the present disclosure, where when the pre-allocated retransmission resource is the first retransmission resource, a transmission mode of the retransmission configuration includes any one of:
the retransmission configuration is transmitted on a Media Access Control (MAC) layer signaling or a RRC signaling, and the first retransmission resource is a continuous resource or a periodic resource;
the retransmission configuration is transmitted on a Physical Downlink Control Channel (PDCCH), and the retransmission configuration includes at least one of a time-frequency resource location, effective times of retransmission resource, a duration of retransmission resource and a time interval between retransmission resources.

In some embodiments of the present disclosure, the first retransmission resource may be a certain transmission resource, or may be a resource pool formed by multiple resources, which is not further limited herein. When the first retransmission resource is a retransmission resource allocated by the network-side device to the terminal pair, the first retransmission resource is shared by all HARQ processes of the receiving terminal indicated by the terminal pair, that is, all retransmissions of the data packet may use the first retransmission resource. Specifically, which HARQ process is used for retransmission may be decided by the sending terminal, and when the sending terminal sends the direct link resource indication to the receiving terminal, the sending terminal may indicate which HARQ process is to be retransmitted in the direct link resource indication.

When the first retransmission resource is a retransmission resource allocated by the network-side device to the sending terminal, the first retransmission resource is shared by all HARQ processes of the sending terminal, that is, the first retransmission resource can be used for retransmission of all data packets. Specifically, which HARQ process is used for retransmission may be decided by the sending terminal, and when the sending terminal sends the direct link resource indication to the receiving terminal, the sending terminal may indicate which HARQ process is to be retransmitted in the direct link resource indication.

Further, the first retransmission resource which is allocated is activated or deactivated when the retransmission configuration is transmitted on the MAC layer signaling or the RRC signaling.

In some embodiments of the present disclosure, it may be agreed that the first retransmission resource is in an active state after being allocated, so that the sending terminal may directly perform the data packet retransmission on the first retransmission resource. Alternatively, it may be agreed that the first retransmission resource is in a deactivated state when the first retransmission resource is allocated, and at this time, the retransmission configuration includes a period indication, or the retransmission configuration includes a period indication and a time-frequency resource indication. When the data packet needs to be retransmitted, the first retransmission resource may be activated. Specifically, the activation mode of the first retransmission resource may be set according to actual needs, for example, the activation or deactivation mode of the first retransmission resource includes any one of the following:
according to a protocol agreement, the first retransmission resource is activated when the first retransmission resource is scheduled for the initial transmission, and a time point of activating the first retransmission resource is spaced from a time point of the initial transmission by a preset time interval;
the first retransmission resource is indicated to be activated or deactivated, through indication information in an initial transmission scheduling command;
the first retransmission resource is indicated to be activated or deactivated, through an independent PDCCH command.

In some embodiments of the present disclosure, if there is no specific time-frequency resource indication in the retransmission configuration, the time-frequency resource and the transmission format indicated by the initial transmission may be used as the time-frequency resource and the transmission format for retransmission.

In some embodiments of the present disclosure, when the pre-allocated retransmission resource is the second retransmission resource, a transmission mode of the retransmission configuration includes any one of:
the retransmission configuration is transmitted on an MAC layer signaling or a RRC signaling, the retransmission configuration includes at least one of: whether to start a pre-allocated retransmission resource mechanism, repeating times of the pre-allocated retransmission resource, a time interval between the initial transmission and a first retransmission and a time interval between adjacent retransmissions each time, and an effective time of the pre-allocated retransmission resource;
the retransmission configuration is transmitted on a PDCCH, and the retransmission configuration includes at least one of: effective times of the pre-allocated retransmission resource, a duration of retransmission resource and a time interval between retransmission resources.

Further, when the pre-allocated retransmission resource is the first retransmission resource or the second retransmission resource, the first retransmission resource and the second retransmission resource may be released, thereby improving the utilization rate of the time-frequency resource. Specifically, the retransmission resource release mode may be set according to actual needs, for example, the terminal may send a release instruction to the network-side device to release the retransmission resource, so that the retransmission resource fails, or the network-side device may send the release instruction to release the retransmission resource in advance, so that the retransmission resource fails.

The first retransmission resource is invalid in a case that any of first preset conditions is met, where the first preset conditions include at least one of:
the network-side device sends, to the sending terminal, a command for releasing the first retransmission resource;
the network-side device sends a scheduling command, where the scheduling command is configured to indicate sending a new data packet transmission in a same source, a same target and a same process on the direct link; and
the network-side device receives a release instruction sent by the sending terminal or the receiving terminal for the first retransmission resource.

In some embodiments of the present disclosure, the second retransmission resource is invalid in a case that any of second preset conditions is met, where the second preset conditions include at least one of:
a maximum retransmission times is reached or a configured duration of retransmission resource is exceeded;
the network-side device sends, to the sending terminal, a command for releasing the pre-allocated retransmission resource;
the network-side device sends a scheduling command, where the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

It should be noted that the scheduling command may include at least one of the same source ID, the same target ID, and the same process number. The source ID is the identification of the sending terminal on the direct link, and the target ID is used for identifying the receiving terminal. Specifically, in the protocol, the target ID may be an identifier of a receiving terminal, a service identifier or a group identifier of a service to be sent, and the like on the direct link.

For a better understanding of the present disclosure, the following detailed description is directed to different implementations of different types of pre-allocated retransmission resources.

Scheme 1: the pre-allocated retransmission resource is a shared resource pool, and the sending terminal performs HARQ retransmission through the shared resource pool.

In Scheme 1, the steps implemented by the network-side device include:

Step 1: allocating a shared resource pool for a sending terminal through Uu link system messages or RRC signaling, wherein the shared resource pool is a direct link resource pool under mode2 in 5G or a direct link resource pool under LTE mode 4; or an additional pool of resources (exceptional pool). These resource pools are shared by the terminals that received the resource pool allocation. In particular, the network-side device may indicate which resource pool or resource pools may be used for retransmission of the direct link scheduled by the network-side device in configuration signaling for sending a retransmission configuration to the sending terminal.

Step 2: allocating initial transmission resources for unicast or multicast transmission on the direct link to the terminal, where the transmission resources are dedicated to the sending terminal receiving the resource allocation command. The initial resource allocation may be a configured resource scheduling or a dynamic resource scheduling.

In Scheme 1, the step implemented by the sending terminal includes:

Step 1: a sending terminal receives a shared resource pool configured by network-side device through system messages or RRC signaling, where the resource pool is a direct link resource pool under mode2 in 5G or a direct link resource pool under LTE mode 4; or an additional pool of resources (exceptional pool).

Step 2: and the sending terminal receives the direct link resource allocation of the network-side device to the terminal and organizes the data packet on the allocated resource for initial transmission.

Step 3: when receiving NACK feedback of a receiving terminal or not receiving ACK feedback of the receiving terminal within preset time, a sending terminal selects a resource pool which can be used for the data retransmission in a pre-allocated retransmission resource pool, and initiates retransmission of the data packet in the selected resource pool. Step 3 is repeated until the data reception is successful, or the maximum number of transmissions is reached, or the higher or physical layer indicates that the transmission is dropped.

In Scheme 1, the receiving terminal implements the steps including:
Step 1: receiving a data packet from a sending terminal according to a scheduling resource indication on a direct link;
Step 2: if the data packet is not received correctly, sending NACK feedback on the direct link, or not sending any feedback; if the data packet is received correctly, ACK feedback is sent on the direct link, or no feedback is sent. Which feedback method is used depends on the feedback retransmission strategy. For example, if the sending terminal performs retransmission according to NACK feedback, the receiving terminal may not transmit ACK feedback when data reception is successful, but needs to transmit NACK when data reception is unsuccessful; if the sending terminal does not receive the feedback for retransmission according to a period of time, the receiving terminal needs to send ACK when the data reception is successful, but may not send NACK when the data reception is unsuccessful.
Step 3: receiving the retransmission of the data packet according to the resource allocation indication of the sending terminal. And repeating the steps 1-3 until the data is successfully received, or the maximum transmission times is reached, or the high layer or the physical layer indicates that the transmission is discarded.

Scheme 2: the pre-allocated retransmission resource is a first retransmission resource, the sending terminal performs HARQ retransmission on the allocated first retransmission resource for the terminal through the network-side device, or the sending terminal performs HARQ retransmission on the first retransmission resource allocated for the sending terminal through the network-side device.

In Scheme 2, the steps implemented by the network-side device include:
Step 1: the network-side device pre-configures the pre-allocated retransmission resource pool for the terminal pair (i.e. the sending terminal and the receiving terminal in unicast, or the sending terminal and the receiving terminal in multicast), specifically, the pre-allocated retransmission resource pool may be any one of the following manners:
Configuration mode 1: pre-allocated with higher layer signaling: when the terminal pair establishes connection or after the terminal pair establishes connection, the network-side device pre-allocates continuous resources or periodic resources for subsequent retransmission for the terminal pair by using RRC signaling or MAC layer signaling, and the pre-allocated retransmission resource pool is immediately activated (becomes effective) after being allocated in the allocation formula;
Configuration mode 2: performing subsequent activation or deactivation by using high-layer signaling configuration.

The configuration process includes the following steps: when a terminal establishes a connection or after the terminal establishes a connection, a network-side device uses an RRC signaling or an MAC layer signaling as a configuration command to pre-allocate persistent resources or periodic resources for subsequent retransmission to the terminal, where the configuration command may include a period and a time-frequency resource indication, or may only include a period and no specific time-frequency resource.

Activation or deactivation process: the protocol is appointed to be activated by default when initial transmission scheduling exists, a specified time offset point after initial transmission is taken as a starting point of the effective pre-allocated retransmission resource pool, and if the configuration command does not indicate specific time-frequency resources of the pre-allocated retransmission resource pool, the time-frequency resources and the transmission formats indicated by the initial retransmission scheduling are taken as the time-frequency resources and the transmission formats of subsequent retransmission; or the like, or a combination thereof,

indicating the activation/deactivation of the pre-allocated retransmission resource in the initial transmission scheduling command, optionally indicating the time starting point for activating the pre-allocated retransmission resource pool, if the configuration command does not indicate the specific time frequency resource of the pre-allocated retransmission resource, using the time frequency resource and the transmission format indicated by the initial retransmission scheduling as the time frequency resource and the transmission format of the subsequent retransmission, or,

activating/deactivating the configured pre-allocated retransmission resources through an independent physical layer PDCCH command, and if the configuration command does not indicate specific time-frequency resources of a pre-allocated retransmission resource pool, indicating the time-frequency resources and transmission formats of subsequent retransmission in the physical layer PDCCH command.

Configuration mode 3: the pre-allocated retransmission resources are sent with a physical layer PDCCH command. The network-side device sends the pre-allocated retransmission resource through a physical layer PDCCH command, the command can contain necessary information such as retransmission time-frequency resource location, effective times of retransmission resource or duration of retransmission resource, time interval between retransmission resources and the like, and the pre-allocated retransmission resource is invalid when the effective times of retransmission resource reach the maximum or the duration of retransmission resource is overtime.

Step 2: allocating initial transmission resources for unicast or multicast transmission on the direct link to the terminal, wherein the transmission resources are dedicated to the sending terminal receiving the resource allocation command. The initial resource allocation may be a configured resource scheduling or a dynamic resource scheduling.

In Scheme 2, the step implemented by the sending terminal includes:
Step 1: the sending terminal receives the indication of the pre-allocated retransmission resources at the network-side, activates the pre-allocated retransmission resources at the determined time according to the distribution mode of the pre-allocated retransmission resources described for the network-side device, and takes the pre-allocated retransmission resources into effect within the determined time period.
Step 2: the sending terminal receives the initial direct link resource allocation of the network-side device to the terminal and organizes the data packet on the allocated resource for initial transmission.
Step 3: the sending terminal selects resources in a pre-configured retransmission resource pool to initiate retransmission of the data packet when receiving NACK feedback of the receiving terminal or not receiving ACK feedback of the receiving terminal within preset time. Step 3 is repeated until the data reception is successful, or the maximum number of transmissions is reached, or the higher or physical layer indicates that the transmission is dropped.

In Scheme 2, the receiving terminal implements the steps including:
Step 1: receiving a data packet from a sending terminal according to a scheduling resource indication on a direct link;
Step 2: if the data packet is not received correctly, sending NACK feedback on the direct link, or not sending any feedback; if the data packet is received correctly, ACK feedback is sent on the direct link, or no feedback is sent. Which feedback method is used depends on the feedback retransmission strategy. For example, if the sending terminal performs retransmission according to NACK feedback, the receiving terminal may not transmit ACK feedback when data reception is successful, but needs to transmit NACK when data reception is unsuccessful; if the sending terminal does not receive the feedback for retransmission according to a period of time, the receiving terminal needs to send ACK when the data reception is successful, but may not send NACK when the data reception is unsuccessful.
Step 3: receiving the retransmission of the data packet according to the resource allocation indication of the sending terminal, and repeating the steps 1-3 until the data is successfully received, or the maximum transmission times is reached, or the high layer or the physical layer indicates that the transmission is discarded.

It should be noted that the first retransmission resource may be a certain transmission resource, or may be a resource pool formed by multiple resources, which is not further limited herein.

When the first retransmission resource is a retransmission resource allocated by the network-side device to the terminal pair, the first retransmission resource is shared by all HARQ processes of the receiving terminal indicated by the terminal pair, that is, all retransmissions of the data packet may use the first retransmission resource. Specifically, which HARQ process is used for retransmission may be decided by the sending terminal, and when the sending terminal sends the direct link resource indication to the receiving terminal, the sending terminal may indicate which HARQ process is to be retransmitted in the direct link resource indication.

When the first retransmission resource is a retransmission resource allocated by the network-side device to the sending terminal, the first retransmission resource is shared by all HARQ processes of the sending terminal, that is, the first retransmission resource can be used for retransmission of all data packets. Specifically, which HARQ process is used for retransmission may be decided by the sending terminal, and when the sending terminal sends the direct link resource indication to the receiving terminal, the sending terminal may indicate which HARQ process is to be retransmitted in the direct link resource indication.

In Scheme 3, the pre-allocated retransmission resource is a second retransmission resource, and the second retransmission resource corresponds to the initially transmitted data packet and is used for retransmitting the initially transmitted data packet.

In Scheme 3, the steps implemented by the network-side device include:
Step 1: when the network-side device performs initial transmission scheduling, the pre-allocated retransmission resources may be any one of the following manners:
   Configuration mode 1: (1) the network-side device sends the configuration information of the pre-configuration retransmission resource to the sending terminal by using RRC signaling or MAC layer signaling in advance, and the configuration information content comprises one or more of the following combinations: whether to start a pre-allocated retransmission resource mechanism, the repeating times of the pre-allocated retransmission resource, the time interval between the initial transmission and the first retransmission and each adjacent retransmission, the effective time length of the pre-allocated retransmission resource and the like. (2) The network-side device allocates the direct link resource for the terminal by using the PDCCH command, the PDCCH scheduling order indicates the time-frequency resource location and the transmission format on the direct link, and the basic meaning of the PDCCH command is used for scheduling and allocating the initial transmission resource. After the PDCCH command is sent, the pre-allocated retransmission resource takes effect, and the pre-allocated retransmission resource may specifically be represented as: the terminal may send the retransmission packet according to the time-frequency resource location and the transmission format indicated by the PDCCH command at the preconfigured period and time point.
   Configuration mode 2: the high layer signaling configures the initial transmission resource and retransmission (configures pre-allocated retransmission of resource type 1): the network-side device may configure a periodic direct link resource for the terminal by using an RRC signaling, and allocate an initial transmission resource and a pre-allocated retransmission resource at the same time on a pre-allocated resource of each period, which specifically includes one or a combination of the following: resource allocation period, time-frequency resource allocation and transmission format, whether to start a pre-allocated retransmission resource mechanism, the repeating times of the pre-allocated retransmission resource, the time interval between the initial transmission and the first retransmission and between each adjacent retransmission, the effective time length of the pre-allocated retransmission resource and the like.
   Configuration mode 3: high layer signaling configuration pre-allocated retransmission basic information + high layer signaling configuration periodic resource + PDCCH allocation resource and activation (configuring pre-allocated retransmission of resource type 2): (1) the network-side sends the configuration information of the pre-configuration retransmission resource to the sending terminal by using RRC signaling or MAC layer signaling in advance, and the configuration information content comprises one or more of the following combinations: whether to start a pre-allocated retransmission resource mechanism, the repeating times of the pre-allocated retransmission resource, the time interval between the initial transmission and the first retransmission and each adjacent retransmission, the effective time length of the pre-allocated retransmission resource and the like. (2) The network-side allocates basic information such as the period of the configuration resource, SPS-V-RNTI and the like for the terminal by using RRC signaling in advance. (3) the network-side device allocates the through link resource for the terminal by using the PDCCH command, and the PDCCH scheduling command indicates the time-frequency resource location and the transmission format on the through link. According to the configuration in (2), the configuration resource indicated by the PDCCH command takes effect periodically; according to the configuration in (1), the time-frequency resource corresponding to the PDCCH command at the period and time point in the configuration is used for pre-allocated retransmission.
   Configuration mode 4: PDCCH resource allocation: and the network-side device simultaneously performs initial transmission and pre-allocated retransmission scheduling in the PDCCH scheduling command. The scheduling command includes the time-frequency resource location and the transmission format of data transmission, and may further include one or more of the following information: the effective times of pre-allocating retransmission resources, the duration of the retransmission resources, the time interval of the retransmission resources and the like.
Step 2: stopping the pre-allocated retransmission resources when one of the following stopping conditions is reached, and rescheduling transmission for other data packets for subsequent pre-allocated retransmission resources of the same process, wherein the stopping conditions include at least one of:
   the maximum retransmission times are reached or the configured duration of retransmission resource is exceeded;
   the network-side device sends a command for releasing the pre-allocated retransmission resource to a sending terminal;
   the network-side device sends a scheduling command, where the scheduling command is configured to indicate sending a new data packet transmission in a same source, a same target and a same process on the direct link: specifically, the data packet transmission is correct indication ACK, or a pre-allocated retransmission resource release indication sent by PUCCH or MAC layer signaling.

In Scheme 3, the step implemented by the sending terminal includes:
Step 1: the sending terminal receives the pre-allocated retransmission resource indication and the initial transmission scheduling command of the network-side device, and acquires the pre-allocated retransmission resource according to the specific mode of one of the 4 pre-allocated retransmission resource allocation modes.
Step 2: the sending terminal organizes the data packet on the allocated resources for initial transmission.
Step 3: the sending terminal selects resources in a pre-configured retransmission resource pool to initiate retransmission of the data packet when receiving NACK feedback of the receiving terminal or not receiving ACK feedback of the receiving terminal within preset time. Step 3 is repeated until the data reception is successful, or the maximum number of transmissions is reached, or the higher or physical layer indicates that the transmission is dropped.

Optionally, the method may further include Step 4: sending a pre-allocated retransmission resource release indication or ACK to the base station after the data transmission is successful; or receiving a pre-allocated retransmission resource release indication sent by the base station, and determining that the data packet retransmission cannot be continued on the pre-allocated retransmission resource.

In Scheme 3, the receiving terminal implements the steps including:
Step 1: receiving the data packet from the sending terminal according to the scheduling resource indication on the direct link.

Before this, a pre-allocated resource configuration indication sent by a network-side device or a sending terminal may be received.

Step 2: if the data packet is not received correctly, sending NACK feedback on the direct link, or not sending any feedback; if the data packet is received correctly, ACK feedback is sent on the direct link, or no feedback is sent. Which feedback method is used depends on the feedback retransmission strategy. For example, if the sending terminal performs retransmission according to NACK feedback, the receiving terminal may not transmit ACK feedback when data reception is successful, but needs to transmit NACK when data reception is unsuccessful; if the sending terminal does not receive the feedback for retransmission according to a period of time, the receiving terminal needs to send ACK when the data reception is successful, but may not send NACK when the data reception is unsuccessful.

Step 3: receiving the retransmission of the data packet according to the resource allocation indication of the sending terminal or the pre-allocated retransmission resource acquired in advance, and repeating the steps 1-3 until the data is successfully received, or the maximum transmission times is reached, or the high layer or the physical layer indicates that the transmission is discarded.

Optionally, the method may further include Step 4: sending a pre-allocated retransmission resource release indication or ACK to the base station after the data transmission is successful; or receiving a pre-allocated retransmission resource release indication sent by the base station, and determining that the retransmission of the data packet cannot be continuously received on the pre-allocated retransmission resource.

In some embodiments of the present disclosure, a retransmission configuration sent by a network-side device is received, where the retransmission configuration is configured to indicate a pre-allocated retransmission resource; and a hybrid automatic repeat request (HARQ) retransmission corresponding to an initial transmission is performed on the pre-allocated retransmission resource. Since the pre-allocated resources are pre-allocated by the network-side device, it is not required to apply to the network-side device for retransmission resources when an initial transmission fails, thereby reducing the signaling overhead and the data retransmission delay effectively, so that it is able to solve the problems of huge consumption of feedback resources and multiplying time delay caused by the adoption of an HARQ mechanism in a direct link transmission mode allocated by the network-side, and low time delay and high reliability of direct link data transmission are effectively guaranteed.

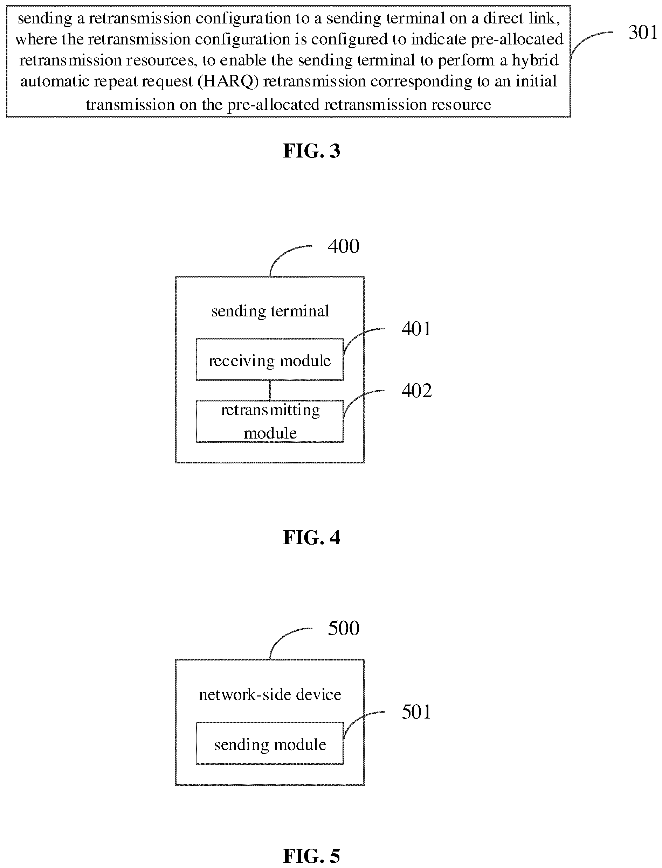

Referring to Fig. 3, Fig. 3 is a flowchart of a data transmission method of the Internet of vehicles according to some embodiments of the present disclosure, and as shown in Fig. 3, the method is applied to a network-side device, and includes the following steps:
Step 301: sending a retransmission configuration to a sending terminal on a direct link, where the retransmission configuration is configured to indicate pre-allocated retransmission resources, to enable the sending terminal to perform a hybrid automatic repeat request (HARQ) retransmission corresponding to an initial transmission on the pre-allocated retransmission resource.

Optionally, the pre-allocated retransmission resource is a shared resource pool, a first retransmission resource, or a second retransmission resource, where
the first retransmission resource is a retransmission resource pool allocated by the network-side device for the sending terminal or a terminal pair,
the second retransmission resource is a retransmission resource allocated by the network-side device for each initially transmitted data packet, and the terminal pair includes the sending terminal and a receiving terminal on the direct link.

Optionally, when the pre-allocated retransmission resource is the shared resource pool, the retransmission configuration is transmitted on a broadcast message or Radio Resource Control (RRC) signaling; the retransmission configuration is configured to indicate one or more of the shared resource pools.

Optionally, the shared resource pool is a direct link resource pool or an additional resource pool in a resource allocation mode in which a terminal autonomously selects resources.

Optionally, when the pre-allocated retransmission resource is the first retransmission resource, a transmission mode of the retransmission configuration includes any one of:
the retransmission configuration is transmitted on a Media Access Control (MAC) layer signaling or a RRC signaling, and the first retransmission resource is a continuous resource or a periodic resource;
the retransmission configuration is transmitted on a Physical Downlink Control Channel (PDCCH), and the retransmission configuration includes at least one of a time-frequency resource location, effective times of retransmission resource, a duration of retransmission resource and a time interval between retransmission resources.

Optionally, the first retransmission resource which is allocated is activated or deactivated when the retransmission configuration is transmitted on the MAC layer signaling or the RRC signaling.

Optionally, the first retransmission resource which is allocated is deactivated, the retransmission configuration includes a period indication, or the retransmission configuration includes a period indication and a time-frequency resource indication; the first retransmission resource is activated or deactivated in any one of the following modes:
according to a protocol agreement, the first retransmission resource is activated when the first retransmission resource is scheduled for the initial transmission, and a time point of activating the first retransmission resource is spaced from a time point of the initial transmission by a preset time interval;
the first retransmission resource is indicated to be activated or deactivated, through indication information in an initial transmission scheduling command;
the first retransmission resource is indicated to be activated or deactivated, through an independent PDCCH command.

Optionally, when the pre-allocated retransmission resource is the second retransmission resource, a transmission mode of the retransmission configuration includes any one of:
the retransmission configuration is transmitted on an MAC layer signaling or a RRC signaling, the retransmission configuration includes at least one of: whether to start a pre-allocated retransmission resource mechanism, repeating times of the pre-allocated retransmission resource, a time interval between the initial transmission and a first retransmission and a time interval between adjacent retransmissions each time, and an effective time of the pre-allocated retransmission resource;
the retransmission configuration is transmitted on a PDCCH, and the retransmission configuration includes at least one of: effective times of the pre-allocated retransmission resource, a duration of retransmission resource and a time interval between retransmission resources.

Optionally, when the pre-allocated retransmission resource is the first retransmission resource, the first retransmission resource is invalid in a case that any of first preset conditions is met, where the first preset conditions include at least one of:
the network-side device sends, to the sending terminal, a command for releasing the first retransmission resource;
the network-side device sends a scheduling command, where the scheduling command is configured to indicate sending a new data packet transmission in a same source, a same target and a same process on the direct link; and
the network-side device receives a release instruction sent by the sending terminal or the receiving terminal for the first retransmission resource.

Optionally, when the pre-allocated retransmission resource is the second retransmission resource, the second retransmission resource is invalid in a case that any of second preset conditions is met, where the second preset conditions include at least one of:
a maximum retransmission times is reached or a configured duration of retransmission resource is exceeded;
the network-side device sends, to the sending terminal, a command for releasing the pre-allocated retransmission resource;
the network-side device sends a scheduling command, where the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

It should be noted that, this embodiment is used as an implementation of the network side device corresponding to the embodiment shown in Fig. 2, and specific implementation thereof may refer to relevant descriptions of the embodiment shown in fig. 2, so that, in order to avoid repeated descriptions, this embodiment is not described again, and the same beneficial effects may also be achieved.

Referring to Fig. 4, Fig. 4 is a structural diagram of a sending terminal according to some embodiments of the present disclosure, and as shown in Fig. 4, the sending terminal 400 includes:
a receiving module 401, configured to receive a retransmission configuration sent by a network-side device, where the retransmission configuration is configured to indicate a pre-allocated retransmission resource; and
a retransmitting module 402, configured to perform a hybrid automatic repeat request (HARQ) retransmission corresponding to an initial transmission, on the pre-allocated retransmission resource.

Optionally, the pre-allocated retransmission resource is a shared resource pool, a first retransmission resource, or a second retransmission resource, where
the first retransmission resource is a retransmission resource pool allocated by the network-side device for the sending terminal or a terminal pair,
the second retransmission resource is a retransmission resource allocated by the network-side device for each initially transmitted data packet, and the terminal pair includes the sending terminal and a receiving terminal on the direct link.

Optionally, when the pre-allocated retransmission resource is the shared resource pool, the retransmission configuration is transmitted on a broadcast message or Radio Resource Control (RRC) signaling; the retransmission configuration is configured to indicate one or more of the shared resource pools.

Optionally, the shared resource pool is a direct link resource pool or an additional resource pool in a resource allocation mode in which a terminal autonomously selects resources.

Optionally, when the pre-allocated retransmission resource is the first retransmission resource, a transmission mode of the retransmission configuration includes any one of:
the retransmission configuration is transmitted on a Media Access Control (MAC) layer signaling or a RRC signaling, and the first retransmission resource is a continuous resource or a periodic resource;
the retransmission configuration is transmitted on a Physical Downlink Control Channel (PDCCH), and the retransmission configuration includes at least one of a time-frequency resource location, effective times of retransmission resource, a duration of retransmission resource and a time interval between retransmission resources.

Optionally, the first retransmission resource which is allocated is activated or deactivated when the retransmission configuration is transmitted on the MAC layer signaling or the RRC signaling.

Optionally, the first retransmission resource which is allocated is deactivated, the retransmission configuration includes a period indication, or the retransmission configuration includes a period indication and a time-frequency resource indication; the first retransmission resource is activated or deactivated in any one of the following modes:
according to a protocol agreement, the first retransmission resource is activated when the first retransmission resource is scheduled for the initial transmission, and a time point of activating the first retransmission resource is spaced from a time point of the initial transmission by a preset time interval;
the first retransmission resource is indicated to be activated or deactivated, through indication information in an initial transmission scheduling command;
the first retransmission resource is indicated to be activated or deactivated, through an independent PDCCH command.

Optionally, when the pre-allocated retransmission resource is the second retransmission resource, a transmission mode of the retransmission configuration includes any one of:
the retransmission configuration is transmitted on an MAC layer signaling or a RRC signaling, the retransmission configuration includes at least one of: whether to start a pre-allocated retransmission resource mechanism, repeating times of the pre-allocated retransmission resource, a time interval between the initial transmission and a first retransmission and a time interval between adjacent retransmissions each time, and an effective time of the pre-allocated retransmission resource;
the retransmission configuration is transmitted on a PDCCH, and the retransmission configuration includes at least one of: effective times of the pre-allocated retransmission resource, a duration of retransmission resource and a time interval between retransmission resources.

Optionally, when the pre-allocated retransmission resource is the first retransmission resource, the first retransmission resource is invalid in a case that any of first preset conditions is met, where the first preset conditions include at least one of:
the network-side device sends, to the sending terminal, a command for releasing the first retransmission resource;
the network-side device sends a scheduling command, where the scheduling command is configured to indicate sending a new data packet transmission in a same source, a same target and a same process on the direct link; and
the network-side device receives a release instruction sent by the sending terminal or the receiving terminal for the first retransmission resource.

Optionally, when the pre-allocated retransmission resource is the second retransmission resource, the second retransmission resource is invalid in a case that any of second preset conditions is met, where the second preset conditions include at least one of:
a maximum retransmission times is reached or a configured duration of retransmission resource is exceeded;
the network-side device sends, to the sending terminal, a command for releasing the pre-allocated retransmission resource;
the network-side device sends a scheduling command, where the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

It should be noted that the terminal 400 in some embodiments of the present disclosure may be a terminal in any implementation manner in method embodiments in some embodiments of the present disclosure, and any implementation manner of the terminal in method embodiments in some embodiments of the present disclosure may be implemented by the terminal 400 in some embodiments of the present disclosure, and achieve the same beneficial effect, and is not described herein again.

Referring to Fig. 5 which is a structural diagram of a network-side device according to some embodiments of the present disclosure, and as shown in Fig. 5, a network-side device 500 includes:
a sending module 501, configured to send a retransmission configuration to a sending terminal on a direct link, where the retransmission configuration is configured to indicate pre-allocated retransmission resources, to enable the sending terminal to perform a hybrid automatic repeat request (HARQ) retransmission corresponding to an initial transmission on the pre-allocated retransmission resource.

Optionally, the pre-allocated retransmission resource is a shared resource pool, a first retransmission resource, or a second retransmission resource, where
the first retransmission resource is a retransmission resource pool allocated by the network-side device for the sending terminal or a terminal pair,
the second retransmission resource is a retransmission resource allocated by the network-side device for each initially transmitted data packet, and the terminal pair includes the sending terminal and a receiving terminal on the direct link.

Optionally, when the pre-allocated retransmission resource is the shared resource pool, the retransmission configuration is transmitted on a broadcast message or Radio Resource Control (RRC) signaling; the retransmission configuration is configured to indicate one or more of the shared resource pools.

Optionally, the shared resource pool is a direct link resource pool or an additional resource pool in a resource allocation mode in which a terminal autonomously selects resources.

Optionally, when the pre-allocated retransmission resource is the first retransmission resource, a transmission mode of the retransmission configuration includes any one of:
the retransmission configuration is transmitted on a Media Access Control (MAC) layer signaling or a RRC signaling, and the first retransmission resource is a continuous resource or a periodic resource;
the retransmission configuration is transmitted on a Physical Downlink Control Channel (PDCCH), and the retransmission configuration includes at least one of a time-frequency resource location, effective times of retransmission resource, a duration of retransmission resource and a time interval between retransmission resources.

Optionally, the first retransmission resource which is allocated is activated or deactivated when the retransmission configuration is transmitted on the MAC layer signaling or the RRC signaling.

Optionally, the first retransmission resource which is allocated is deactivated, the retransmission configuration includes a period indication, or the retransmission configuration includes a period indication and a time-frequency resource indication; the first retransmission resource is activated or deactivated in any one of the following modes:
according to a protocol agreement, the first retransmission resource is activated when the first retransmission resource is scheduled for the initial transmission, and a time point of activating the first retransmission resource is spaced from a time point of the initial transmission by a preset time interval;
the first retransmission resource is indicated to be activated or deactivated, through indication information in an initial transmission scheduling command;
the first retransmission resource is indicated to be activated or deactivated, through an independent PDCCH command.

Optionally, when the pre-allocated retransmission resource is the second retransmission resource, a transmission mode of the retransmission configuration includes any one of:
the retransmission configuration is transmitted on an MAC layer signaling or a RRC signaling, the retransmission configuration includes at least one of: whether to start a pre-allocated retransmission resource mechanism, repeating times of the pre-allocated retransmission resource, a time interval between the initial transmission and a first retransmission and a time interval between adjacent retransmissions each time, and an effective time of the pre-allocated retransmission resource;
the retransmission configuration is transmitted on a PDCCH, and the retransmission configuration includes at least one of: effective times of the pre-allocated retransmission resource, a duration of retransmission resource and a time interval between retransmission resources.

Optionally, when the pre-allocated retransmission resource is the first retransmission resource, the first retransmission resource is invalid in a case that any of first preset conditions is met, where the first preset conditions include at least one of:
the network-side device sends, to the sending terminal, a command for releasing the first retransmission resource;
the network-side device sends a scheduling command, where the scheduling command is configured to indicate sending a new data packet transmission in a same source, a same target and a same process on the direct link; and
the network-side device receives a release instruction sent by the sending terminal or the receiving terminal for the first retransmission resource.

Optionally, when the pre-allocated retransmission resource is the second retransmission resource, the second retransmission resource is invalid in a case that any of second preset conditions is met, where the second preset conditions include at least one of:
a maximum retransmission times is reached or a configured duration of retransmission resource is exceeded;
the network-side device sends, to the sending terminal, a command for releasing the pre-allocated retransmission resource;
the network-side device sends a scheduling command, where the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

It should be noted that the network-side device 500 in some embodiments of the present disclosure may be a terminal that is any implementation manner in method embodiments in some embodiments of the present disclosure, and any implementation manner of the terminal in method embodiments in some embodiments of the present disclosure may be implemented by the network-side device 500 in some embodiments of the present disclosure, and achieve the same beneficial effect, and is not described herein again.

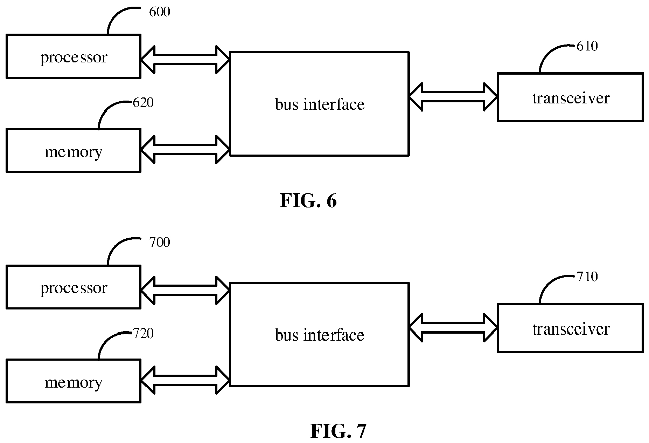

Referring to Fig. 6, Fig. 6 is a structural diagram of another sending terminal according to some embodiments of the present disclosure, and as shown in Fig. 6, the sending terminal includes: a transceiver 610, a memory 620, a processor 600, and a program stored in the memory 620 and executable on the processor 600,
the transceiver 610 is configured to receive a retransmission configuration sent by a network-side device, where the retransmission configuration is configured to indicate a pre-allocated retransmission resource; and perform a hybrid automatic repeat request (HARQ) retransmission corresponding to an initial transmission, on the pre-allocated retransmission resource.

Among other things, the transceiver 610 may be used to receive and transmit data under the control of the processor 600.

In FIG. 6, the bus architecture may include any number of interconnected buses and bridges, with various circuits representing, in particular, one or more processors, represented by processor 600, and a memory, represented by memory 620, being linked together. The bus architecture may also link together various other circuits such as peripherals, voltage regulators, power management circuits, and the like, which are well known in the art, and therefore, will not be described any further herein. The bus interface provides an interface. The transceiver 610 may be a plurality of elements including a transmitter and a receiver that provide a means for communicating with various other apparatus over a transmission medium.

The processor 600 is responsible for managing the bus architecture and general processing, and the memory 620 may store data used by the processor 600 in performing operations.

It should be noted that the memory 620 is not limited to be located only on the sending terminal, and the memory 620 and the processor 600 may be separated and located in different geographical locations.

Optionally, the pre-allocated retransmission resource is a shared resource pool, a first retransmission resource, or a second retransmission resource, where
the first retransmission resource is a retransmission resource pool allocated by the network-side device for the sending terminal or a terminal pair,
the second retransmission resource is a retransmission resource allocated by the network-side device for each initially transmitted data packet, and the terminal pair includes the sending terminal and a receiving terminal on the direct link.

Optionally, when the pre-allocated retransmission resource is the shared resource pool, the retransmission configuration is transmitted on a broadcast message or Radio Resource Control (RRC) signaling; the retransmission configuration is configured to indicate one or more of the shared resource pools.

Optionally, the shared resource pool is a direct link resource pool or an additional resource pool in a resource allocation mode in which a terminal autonomously selects resources, i.e., a shared resource pool in LTE V2X Mode 4 or NR V2X Mode 2.

Optionally, when the pre-allocated retransmission resource is the first retransmission resource, a transmission mode of the retransmission configuration includes any one of:
the retransmission configuration is transmitted on a Media Access Control (MAC) layer signaling or a RRC signaling, and the first retransmission resource is a continuous resource or a periodic resource;
the retransmission configuration is transmitted on a Physical Downlink Control Channel (PDCCH), and the retransmission configuration includes at least one of a time-frequency resource location, effective times of retransmission resource, a duration of retransmission resource and a time interval between retransmission resources.

Optionally, the first retransmission resource which is allocated is activated or deactivated when the retransmission configuration is transmitted on the MAC layer signaling or the RRC signaling.

Optionally, the first retransmission resource which is allocated is deactivated, the retransmission configuration includes a period indication, or the retransmission configuration includes a period indication and a time-frequency resource indication; the first retransmission resource is activated or deactivated in any one of the following modes:
according to a protocol agreement, the first retransmission resource is activated when the first retransmission resource is scheduled for the initial transmission, and a time point of activating the first retransmission resource is spaced from a time point of the initial transmission by a preset time interval;
the first retransmission resource is indicated to be activated or deactivated, through indication information in an initial transmission scheduling command;
the first retransmission resource is indicated to be activated or deactivated, through an independent PDCCH command.

Optionally, when the pre-allocated retransmission resource is the second retransmission resource, a transmission mode of the retransmission configuration includes any one of:
the retransmission configuration is transmitted on an MAC layer signaling or a RRC signaling, the retransmission configuration includes at least one of: whether to start a pre-allocated retransmission resource mechanism, repeating times of the pre-allocated retransmission resource, a time interval between the initial transmission and a first retransmission and a time interval between adjacent retransmissions each time, and an effective time of the pre-allocated retransmission resource;
the retransmission configuration is transmitted on a PDCCH, and the retransmission configuration includes at least one of: effective times of the pre-allocated retransmission resource, a duration of retransmission resource and a time interval between retransmission resources.

Optionally, when the pre-allocated retransmission resource is the first retransmission resource, the first retransmission resource is invalid in a case that any of first preset conditions is met, where the first preset conditions include at least one of:
the network-side device sends, to the sending terminal, a command for releasing the first retransmission resource;
the network-side device sends a scheduling command, where the scheduling command is configured to indicate sending a new data packet transmission in a same source, a same target and a same process on the direct link; and
the network-side device receives a release instruction sent by the sending terminal or the receiving terminal for the first retransmission resource.

Optionally, when the pre-allocated retransmission resource is the second retransmission resource, the second retransmission resource is invalid in a case that any of second preset conditions is met, where the second preset conditions include at least one of:
a maximum retransmission times is reached or a configured duration of retransmission resource is exceeded;
the network-side device sends, to the sending terminal, a command for releasing the pre-allocated retransmission resource;
the network-side device sends a scheduling command, where the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

It should be noted that, in some embodiments of the present disclosure, the terminal may be a terminal in any implementation manner in method embodiments of some embodiments of the present disclosure, and any implementation manner of the terminal in the method embodiments of some embodiments of the present disclosure may be implemented by the terminal in some embodiments of the present disclosure, so as to achieve the same beneficial effect, and details are not described here again.

Referring to Fig. 7, Fig. 7 is a structural diagram of another network-side device according to some embodiments of the present disclosure, and as shown in Fig. 7, the network-side device includes: a transceiver 710, a memory 720, a processor 700, and a program stored in the memory 720 and executable on the processor,
the transceiver 710 is configured to send a retransmission configuration to a sending terminal on a direct link, where the retransmission configuration is configured to indicate pre-allocated retransmission resources, to enable the sending terminal to perform a hybrid automatic repeat request (HARQ) retransmission corresponding to an initial transmission on the pre-allocated retransmission resource.

The transceiver 710 may be used to receive and transmit data under the control of the processor 700.

In Fig. 7, the bus architecture may include any number of interconnected buses and bridges, with various circuits being linked together, in particular, one or more processors, represented by processor 700, and memory, represented by memory 720. The bus architecture may also link together various other circuits such as peripherals, voltage regulators, power management circuits, and the like, which are well known in the art, and therefore, will not be described any further herein. The bus interface provides an interface. The transceiver 710 may be a plurality of elements including a transmitter and a receiver that provide a means for communicating with various other apparatus over a transmission medium.

The processor 700 is responsible for managing the bus architecture and general processing, and the memory 720 may store data used by the processor 700 in performing operations.

It should be noted that the memory 720 is not limited to be on the network-side device, and the memory 720 and the processor 700 may be separated and located in different geographical locations.

Optionally, the pre-allocated retransmission resource is a shared resource pool, a first retransmission resource, or a second retransmission resource, where
the first retransmission resource is a retransmission resource pool allocated by the network-side device for the sending terminal or a terminal pair,
the second retransmission resource is a retransmission resource allocated by the network-side device for each initially transmitted data packet, and the terminal pair includes the sending terminal and a receiving terminal on the direct link.

Optionally, when the pre-allocated retransmission resource is the shared resource pool, the retransmission configuration is transmitted on a broadcast message or Radio Resource Control (RRC) signaling; the retransmission configuration is configured to indicate one or more of the shared resource pools.

Optionally, the shared resource pool is a direct link resource pool or an additional resource pool in a resource allocation mode in which a terminal autonomously selects resources.

Optionally, when the pre-allocated retransmission resource is the first retransmission resource, a transmission mode of the retransmission configuration includes any one of:
the retransmission configuration is transmitted on a Media Access Control (MAC) layer signaling or a RRC signaling, and the first retransmission resource is a continuous resource or a periodic resource;
the retransmission configuration is transmitted on a Physical Downlink Control Channel (PDCCH), and the retransmission configuration includes at least one of a time-frequency resource location, effective times of retransmission resource, a duration of retransmission resource and a time interval between retransmission resources.

Optionally, the first retransmission resource which is allocated is activated or deactivated when the retransmission configuration is transmitted on the MAC layer signaling or the RRC signaling.

Optionally, the first retransmission resource which is allocated is deactivated, the retransmission configuration includes a period indication, or the retransmission configuration includes a period indication and a time-frequency resource indication; the first retransmission resource is activated or deactivated in any one of the following modes:
according to a protocol agreement, the first retransmission resource is activated when the first retransmission resource is scheduled for the initial transmission, and a time point of activating the first retransmission resource is spaced from a time point of the initial transmission by a preset time interval;
the first retransmission resource is indicated to be activated or deactivated, through indication information in an initial transmission scheduling command;
the first retransmission resource is indicated to be activated or deactivated, through an independent PDCCH command.

Optionally, when the pre-allocated retransmission resource is the second retransmission resource, a transmission mode of the retransmission configuration includes any one of:
the retransmission configuration is transmitted on an MAC layer signaling or a RRC signaling, the retransmission configuration includes at least one of: whether to start a pre-allocated retransmission resource mechanism, repeating times of the pre-allocated retransmission resource, a time interval between the initial transmission and a first retransmission and a time interval between adjacent retransmissions each time, and an effective time of the pre-allocated retransmission resource;
the retransmission configuration is transmitted on a PDCCH, and the retransmission configuration includes at least one of: effective times of the pre-allocated retransmission resource, a duration of retransmission resource and a time interval between retransmission resources.

Optionally, when the pre-allocated retransmission resource is the first retransmission resource, the first retransmission resource is invalid in a case that any of first preset conditions is met, where the first preset conditions include at least one of:
the network-side device sends, to the sending terminal, a command for releasing the first retransmission resource;
the network-side device sends a scheduling command, where the scheduling command is configured to indicate sending a new data packet transmission in a same source, a same target and a same process on the direct link; and
the network-side device receives a release instruction sent by the sending terminal or the receiving terminal for the first retransmission resource.

Optionally, when the pre-allocated retransmission resource is the second retransmission resource, the second retransmission resource is invalid in a case that any of second preset conditions is met, where the second preset conditions include at least one of:
a maximum retransmission times is reached or a configured duration of retransmission resource is exceeded;
the network-side device sends, to the sending terminal, a command for releasing the pre-allocated retransmission resource;
the network-side device sends a scheduling command, where the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

It should be noted that, in some embodiments of the present disclosure, the network-side device may be a network-side device in any implementation manner in method embodiments of some embodiments of the present disclosure, and any implementation manner of the network-side device in the method embodiments of some embodiments of the present disclosure may be implemented by the network-side device in some embodiments of the present disclosure, and achieve the same beneficial effect, which is not described herein again.

A computer-readable storage medium storing a computer program is further provided in some embodiments of the present disclosure, where the program is executed by a processor to perform the data transmission method of Internet of vehicles at the sending terminal, or the program is executed by a processor to perform the data transmission method of Internet of vehicles at the network-side device.

In the several embodiments provided in the present application, it should be understood that the disclosed method and apparatus may be implemented in other manners. For example, the above-described apparatus embodiments are merely illustrative, and for example, the division of the units is only one type of logical functional division, and other divisions may be realized in practice, for example, multiple units or components may be combined or integrated into another system, or some features may be omitted, or not executed. In addition, the shown or discussed mutual coupling or direct coupling or communication connection may be an indirect coupling or communication connection through some interfaces, devices or units, and may be in an electrical, mechanical or other form.

In addition, functional units in the embodiments of the present disclosure may be integrated into one processing unit, or each unit may be separately and physically included, or two or more units may be integrated into one unit. The integrated unit may be implemented in the form of hardware, or in the form of hardware plus a software functional unit.

The integrated unit implemented in the form of a software functional unit may be stored in a computer-readable storage medium. The software functional unit is stored in a storage medium and includes several instructions to enable a computer device (which may be a personal computer, a server, or a network device, etc.) to execute some steps of the method for processing the information data block according to various embodiments of the present disclosure. And the aforementioned storage medium includes: a U-disk, a portable hard disk, a Read-Only Memory (ROM), a Random Access Memory (RAM), a magnetic disk or an optical disk, and other media capable of storing program codes.

While the foregoing is directed to embodiments of the present disclosure, it will be appreciated by those skilled in the art that various changes and modifications may be made without departing from the principles of the disclosure, and it is intended that such changes and modifications be considered as within the scope of the disclosure.

## Claims

1. A data transmission method of Internet of vehicles, applied to a sending terminal on a direct link and comprising:
receiving (201) a retransmission configuration sent by a network-side device, wherein the retransmission configuration is configured to indicate a pre-allocated retransmission resource; and
performing (202) a hybrid automatic repeat request, HARQ, retransmission corresponding to an initial transmission, on the pre-allocated retransmission resource;
wherein the pre-allocated retransmission resource is a second retransmission resource, wherein
a transmission mode of the retransmission configuration comprises any one of:
the retransmission configuration is transmitted on an MAC layer signaling or a RRC signaling, the retransmission configuration comprises at least one of: whether to start a pre-allocated retransmission resource mechanism, and an effective time of the pre-allocated retransmission resource;
the retransmission configuration is transmitted on a PDCCH, and the retransmission configuration comprises at least one of: effective times of the pre-allocated retransmission resource, a duration of retransmission resource and a time interval between retransmission resources.

2. The method according to claim 1, wherein the second retransmission resource is invalid in a case that any of second preset conditions is met, wherein the second preset conditions comprise at least one of:
a maximum retransmission times is reached or a configured duration of retransmission resource is exceeded;
the network-side device sends, to the sending terminal, a command for releasing the pre-allocated retransmission resource;
the network-side device sends a scheduling command, wherein the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

3. A data transmission method of Internet of vehicles, applied to a network-side device and comprising:
sending (301) a retransmission configuration to a sending terminal on a direct link, wherein the retransmission configuration is configured to indicate pre-allocated retransmission resources, to enable the sending terminal to perform a hybrid automatic repeat request, HARQ, retransmission corresponding to an initial transmission on the pre-allocated retransmission resource;
wherein the pre-allocated retransmission resource is a second retransmission resource, wherein
a transmission mode of the retransmission configuration comprises any one of:
the retransmission configuration is transmitted on an MAC layer signaling or a RRC signaling, the retransmission configuration comprises at least one of: whether to start a pre-allocated retransmission resource mechanism, and an effective time of the pre-allocated retransmission resource;
the retransmission configuration is transmitted on a PDCCH, and the retransmission configuration comprises at least one of: effective times of the pre-allocated retransmission resource, a duration of retransmission resource and a time interval between retransmission resources.

4. The method according to claim 3, wherein the second retransmission resource is invalid in a case that any of second preset conditions is met, wherein the second preset conditions comprise at least one of:
a maximum retransmission times is reached or a configured duration of retransmission resource is exceeded;
the network-side device sends, to the sending terminal, a command for releasing the pre-allocated retransmission resource;
the network-side device sends a scheduling command, wherein the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

5. A sending terminal (400), comprising:
a receiving module (401), configured to receive a retransmission configuration sent by a network-side device, wherein the retransmission configuration is configured to indicate a pre-allocated retransmission resource; and
a retransmitting module (402), configured to perform a hybrid automatic repeat request, HARQ, retransmission corresponding to an initial transmission, on the pre-allocated retransmission resource;
wherein the pre-allocated retransmission resource is a second retransmission resource, wherein
a transmission mode of the retransmission configuration comprises any one of:
the retransmission configuration is transmitted on an MAC layer signaling or a RRC signaling, the retransmission configuration comprises at least one of: whether to start a pre-allocated retransmission resource mechanism, and an effective time of the pre-allocated retransmission resource;
the retransmission configuration is transmitted on a PDCCH, and the retransmission configuration comprises at least one of: effective times of the pre-allocated retransmission resource, a duration of retransmission resource and a time interval between retransmission resources.

6. The sending terminal (400) according to claim 5, wherein the second retransmission resource is invalid in a case that any of second preset conditions is met, wherein the second preset conditions comprise at least one of:
a maximum retransmission times is reached or a configured duration of retransmission resource is exceeded;
the network-side device sends, to the sending terminal, a command for releasing the pre-allocated retransmission resource;
the network-side device sends a scheduling command, wherein the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.

7. A network-side device (500), comprising:
a sending module (501), configured to send a retransmission configuration to a sending terminal on a direct link, wherein the retransmission configuration is configured to indicate pre-allocated retransmission resources, to enable the sending terminal to perform a hybrid automatic repeat request, HARQ, retransmission corresponding to an initial transmission on the pre-allocated retransmission resource;
wherein the pre-allocated retransmission resource is a second retransmission resource, wherein
a transmission mode of the retransmission configuration comprises any one of:
the retransmission configuration is transmitted on an MAC layer signaling or a RRC signaling, the retransmission configuration comprises at least one of: whether to start a pre-allocated retransmission resource mechanism, and an effective time of the pre-allocated retransmission resource;
the retransmission configuration is transmitted on a PDCCH, and the retransmission configuration comprises at least one of: effective times of the pre-allocated retransmission resource, a duration of retransmission resource and a time interval between retransmission resources.

8. The network-side device (500) according to claim 7, wherein the second retransmission resource is invalid in a case that any of second preset conditions is met, wherein the second preset conditions comprise at least one of:
a maximum retransmission times is reached or a configured duration of retransmission resource is exceeded;
the network-side device sends, to the sending terminal, a command for releasing the pre-allocated retransmission resource;
the network-side device sends a scheduling command, wherein the scheduling command is configured to indicate sending a new data packet transmission in a same source, a same target and a same process on the direct link;
the network-side device receives a release instruction sent by the sending terminal or the receiving terminal for the second retransmission resource; and
the initially transmitted data packet is sent and received successfully, and the second retransmission resource corresponding to the data packet is invalid.
